# EUROPEAN PATENT APPLICATION

(11) **EP 1 923 735 A2**
(43) Date of publication of application: **21.05.2008**
(21) Application number: 07120503.3
(22) Date of filing: 12.11.2007
(51) Int. Cl.: G02F 1/13357, G02B 27/30

(54) **Backlight unit and display apparatus having the same**

(30) Priority: 20.11.2006 KR 20060114733
(71) Applicant: Samsung Electronics Co., Ltd., Suwon-si, Gyeonggi-do 442-742 (KR)
(72) Inventor: Yoon, Seok-il, Daejeon (KR); Nho, Jeong-ho, Suwon-si Gyeonggi-do (KR); Park, Yung-jun, Gyeonggi-do (KR); Jung, Myung-ryul, Suwon-si Gyeonggi-do (KR); Jeon, Wook-jae, Suwon-si Gyeonggi-do (KR); Lee, Dae-hee, Seoul (KR)
(74) Representative: Robinson, Ian Michael

(57) **Abstract**

A backlight unit, includes: a surface light source (140) which emits a light; and a diffusion collimation member (150) which is provided in a path of the light emitted by the surface light source (140), and comprises a first diffusion sheet (150a) having a plurality of first reflectors (153a) arranged in a first direction and a second diffusion sheet (150b) formed on the first diffusion sheet (150a) and having a plurality of second reflectors (153b) arranged in a second direction forming a predetermined angle with respect to the first direction of the first diffusion sheet (150a).

## Description

### BACKGROUND OF THE INVENTION

### Field of the Invention

Apparatuses and methods consistent with the present invention relate to a backlight unit and a display apparatus having the same, and more particularly, to a backlight unit which provides improved brightness, and a display apparatus having the same.

### Description of the Related Art

A display apparatus includes a liquid crystal display (LCD) panel and a backlight unit. The LCD panel includes a first substrate having a thin film transistor, a second substrate facing the first substrate and a liquid crystal layer interposed between the first and second substrates. The LCD panel does not emit light itself, and thus receives light from the backlight unit. The amount of transmission of light emitted by the backlight unit is adjusted by an alignment of liquid crystals.

A light source of the backlight unit includes a line light source such as cold cathode fluorescent lamp (CCFL) and an external electrode fluorescent lamp (EEFL), and a surface light source such as flat fluorescent lamp (FFL).

The surface light source includes a light emitter to emit light, and a division formed between the light emitters that do not emit light. As the brightness differs between the light emitters and the divisions, a diffusion layer is provided to make the brightness uniform to supply light to the LCD panel.

However, a conventional diffusion layer includes a diffuser which lowers brightness or makes the emitted light uneven in brightness.

### SUMMARY OF THE INVENTION

Accordingly, the present invention provides a backlight unit which improves brightness and brightness uniformity, and a display apparatus having the same, as set forth in the appended claims.

Additional aspects of the present invention will be set forth in part in the description which follows and, in part, will be obvious from the description, or may be learned by practice of the present invention.

The foregoing and/or other aspects of the present invention can be achieved by providing a backlight unit, comprising: a surface light source which emits a light; and a diffusion collimation member which is provided in a path of the light emitted by the surface light source, and comprises a first diffusion sheet having a plurality of first reflectors arranged in a first direction and a second diffusion sheet formed on the first diffusion sheet and having a plurality of second reflectors arranged in a second direction forming a predetermined angle with respect to the first direction of the first diffusion sheet.

According to the embodiment of the present invention, the first diffusion sheet further comprises a first main body, and the plurality of first reflectors has a trapezoid section, and is disposed in a surface of the first main body in the first direction.

According to the embodiment of the present invention, the second diffusion sheet further comprises a second main body, and the plurality of second reflectors has a trapezoid section, and is disposed in a surface of the second main body in the second direction forming the predetermined angle with respect to the first direction.

According to the embodiment of the present invention, the trapezoid section of the first reflectors is different from the trapezoid section of the second reflectors.

According to the embodiment of the present invention, the first direction forms 90° angle with respect to the second direction.

According to the embodiment of the present invention, the first diffusion sheet and the second diffusion sheet comprise one of polymethyl methacrylate (PMMA), poly carbonate (PC), UV curing resin and polyethylene terephthalate (PET).

The foregoing and/or other aspects of the present invention can be achieved by providing a backlight unit, comprising: a surface light source which emits a light; and a diffusion collimation member which is provided in a path of the light emitted by the surface light source, and comprises a first diffusion sheet having a plurality of first reflectors arranged in a first direction and having a reflection surface to reflect light, and a second diffusion sheet formed on the first diffusion sheet and having a plurality of second reflectors arranged in a second direction forming a predetermined angle with respect to the first direction of the first diffusion sheet and having a reflection surface to reflect light; and a coating layer which is formed in at least one of the reflection surface of the first reflectors and the reflection surface of the second reflectors.

According to the embodiment of the present invention, the first diffusion sheet further comprises a first main body, and the plurality of first reflectors has a trapezoid section, and is disposed in a surface of the first main body in the first direction.

According to the embodiment of the present invention, the second diffusion sheet further comprises a second main body, and the plurality of second reflectors has a trapezoid section, and is disposed in a surface of the second main body in the second direction forming the predetermined angle with respect to the first direction.

According to the embodiment of the present invention, the coating layer is disposed in a pair of inclined sides which connect a lower side and an upper side of the trapezoid section of at least one of the first reflectors and the second reflectors.

According to the embodiment of the present invention, the first direction forms 90° angle with respect to the second direction.

The foregoing and/or other aspects of the present invention can be achieved by providing a display apparatus, comprising: a liquid crystal display panel; a surface light source which emits a light to the liquid crystal display panel; and a diffusion collimation member which is provided in a path of the light from the surface light source to the liquid crystal display panel, and comprises a first diffusion sheet having a plurality of first reflectors arranged in a first direction, and a second diffusion sheet formed on the first diffusion sheet and having a plurality of second reflectors arranged in a second direction forming a predetermined angle with respect to the first direction of the first diffusion sheet.

According to the embodiment of the present invention, the first diffusion sheet further comprises a first main body, and the plurality of first reflectors has a trapezoid section, and is disposed in a surface of the first main body toward the liquid crystal display panel in the first direction.

According to the embodiment of the present invention, the second diffusion sheet further comprises a second main body, and the plurality of second reflectors has a trapezoid section, and is disposed in a surface of the second main body toward the liquid crystal display panel in the second direction forming the predetermined angle with respect to the first direction.

According to the embodiment of the present invention, the trapezoid section of the first reflectors is different from the trapezoid section of the second reflectors.

According to the embodiment of the present invention, the first direction forms 90° angle with respect to the second direction.

According to the embodiment of the present invention, the first diffusion sheet and the second diffusion sheet comprise one of polymethyl methacrylate (PMMA), poly carbonate (PC), UV curing resin and polyethylene terephthalate (PET).

The foregoing and/or other aspects of the present invention can be achieved by providing a display apparatus, comprising: a liquid crystal display panel; a surface light source which emits a light to the liquid crystal display panel; and a diffusion collimation member which is provided in a path of the light from the surface light source to the liquid crystal display panel, and comprises a first diffusion sheet having a plurality of first reflectors arranged in a first direction and having a reflection surface to reflect light, and a second diffusion sheet formed on the first diffusion sheet and having a plurality of second reflectors arranged in a second direction forming a predetermined angle with respect to the first direction of the first diffusion sheet and having a reflection surface to reflect light; and a coating layer which is formed in at least one of the reflection surface of the first reflectors and the reflection surface of the second reflectors.

According to the embodiment of the present invention, the first diffusion sheet further comprises a first main body, and the plurality of first reflectors has a trapezoid section, and is disposed in a surface of the first main body toward the liquid crystal display panel in the first direction.

According to the embodiment of the present invention, the second diffusion sheet further comprises a second main body, and the plurality of second reflectors has a trapezoid section, and is disposed in a surface of the second main body toward the liquid crystal display panel in the second direction forming the predetermined angle with respect to the first direction.

According to the embodiment of the present invention, the coating layer is disposed in a pair of inclined sides which connect a lower side and an upper side of the trapezoid section of at least one of the first reflectors and the second reflectors.

According to the embodiment of the present invention, the first direction forms 90° angle with respect to the second direction.

### BRIEF DESCRIPTION OF THE DRAWINGS

The above and/or other aspects of the present invention will become apparent and more readily appreciated from the following description of the exemplary embodiments, taken in conjunction with the accompany drawings of which:
FIG. 1 is an exploded perspective view of a display apparatus according to a first exemplary embodiment of the present invention;
FIG. 2 is a sectional view of the display apparatus according to the first exemplary embodiment of the present invention, taken along line II -II in FIG. 1;
FIG. 3 is a sectional view of the display apparatus according to the first exemplary embodiment of the present invention, taken along line III -III in FIG. 1;
FIG. 4 is an exploded perspective view of a surface light source of the display apparatus according to another exemplary embodiment of the present invention in FIG. 1;
FIG. 5 is a sectional view of a path of the light which passes a diffusion collimation member in FIG. 1;
FIG. 6 is a plan view of the diffusion member in FIG. 1;
FIGS. 7a and 7b illustrate a comparison of brightness uniformity in FIG. 6;
FIGS. 8a and 8b are graphs which illustrate an improvement in brightness in FIG. 6;
FIG. 9 is a sectional view of main parts of a diffusion collimation member of a display apparatus according to a second exemplary embodiment of the present invention; and
FIG. 10 is a sectional view of a path of the light which passes the diffusion collimation member in FIG. 9.

### DETAILED DESCRIPTION OF EXEMPLARY EMBODIMENTS

Hereinafter, exemplary embodiments of the present invention will be described with reference to accompanying drawings, wherein like numerals refer to like elements and repetitive descriptions will be avoided as necessary.

A display apparatus may include a TV or a projector. Hereinafter, a flat panel TV will be described as an exemplary embodiment of the present invention.

### First Exemplary Embodiment

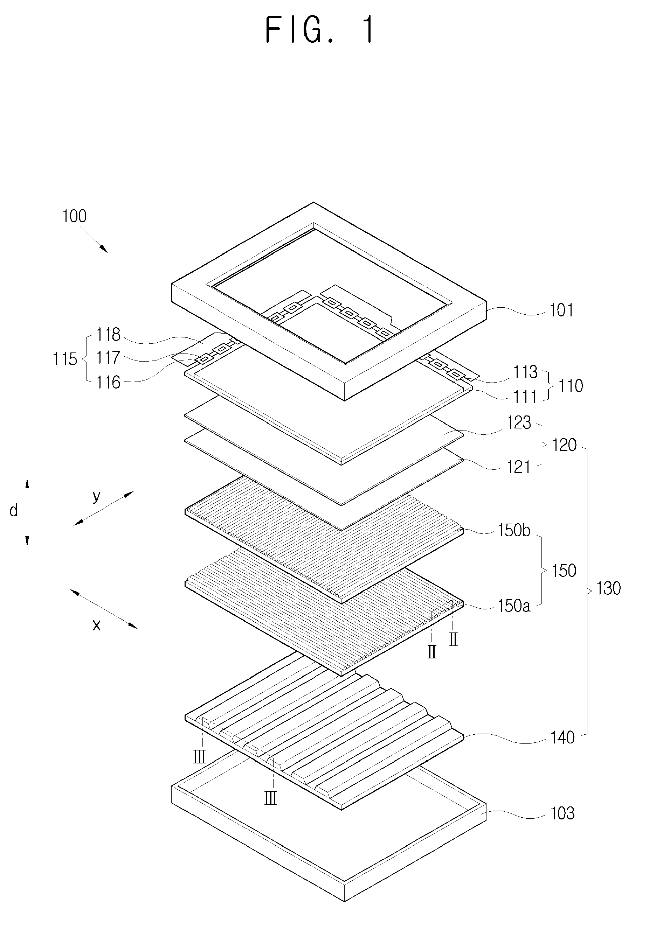

As shown in FIGS. 1 to 5, a display apparatus 100 according to a first exemplary embodiment of the present invention includes a surface light source 140 and a diffusion collimation member 150. The display apparatus 100 further includes a liquid crystal display panel 110.

Hereinafter, each direction will be defined as follows. A 'd' direction refers to a light moving direction from the surface light source 140 to the liquid crystal display panel 110. An 'x' direction refers to a first direction which is perpendicular to the 'd' direction and in which a first reflector 153a of a first diffusion sheet 150a is arranged. A 'y' direction refers to a second direction which is perpendicular to the 'd' direction and in which a second reflector 153b of a second diffusion sheet 150b is arranged. Here, a light may move in the 'x' direction or 'y' direction. However, the light moving in 'x' or 'y' direction is not relevant to the display apparatus 100, and thus the description thereof will be avoided here. Alternatively, a light may move in a slant direction as well as a perpendicular direction to the x and y directions, i.e., a light moves in the 'd' direction and the liquid crystal display panel 110 forms an image thereon.

The liquid crystal display panel 110 includes a first substrate 111 having a thin film transistor and a second substrate 113 facing the first substrate 111. A liquid crystal layer (not shown) is disposed between the first substrate 111 and the second substrate 113. The liquid crystal display panel 110 forms an image by adjusting an arrangement of the liquid crystal layer. The liquid crystal display panel 110 does not emit light itself, and thus receives light from a backlight unit 130 disposed there behind.

A driver 115 is provided in one lateral part of the first substrate 111 to supply a driving signal. The driver 115 includes a flexible printed circuit board (FPC) 116 whose first side is connected with the first substrate 111, a driving chip 117 which is embedded in the FPC 116 and a printed circuit board (PCB) 118 which is connected with a second side of the FPC 116. The driver 115 according to the present invention employs a chip on film (COF) method, but is not limited thereto. Alternatively, the driver 115 may employ other known methods including a tape carrier package (TCP) method and a chip on glass (COG). Otherwise, a part of the driver 115 may be embedded in the first substrate 111 during a wire-forming process.

The backlight unit 130 includes the surface light source 140 which is disposed behind the liquid crystal display panel 110, the first diffusion sheet 150a and the second diffusion sheet 150b. The backlight unit 130 further includes an optical film 120.

The optical film 120 is provided behind the liquid crystal display panel 110, and includes a prism film 121 and a protection film 123.

The prism film 121 includes prisms, which has a triagonal shape, and are arranged uniformly thereon. The prism film 121 collects the light diffused or collimated by the diffusion collimation member 150, in a direction perpendicular to a surface of the liquid crystal display panel 110. There may be provided two prism films 121. In this case, a micro prism formed in the respective prism films 121 forms a predetermined angle. Most of the light which passes the prism films 121 travels vertically to provide uniform brightness.

The protection film 123 protects the prism films 121 which are easily scratched. The protection film 123 may include polyethyleneterephtalate (PET).

The surface light source 140 supplies the light to the diffusion collimation member 150. In the first exemplary embodiment of the present invention, the surface light source 140 includes a flat fluorescent lamp.

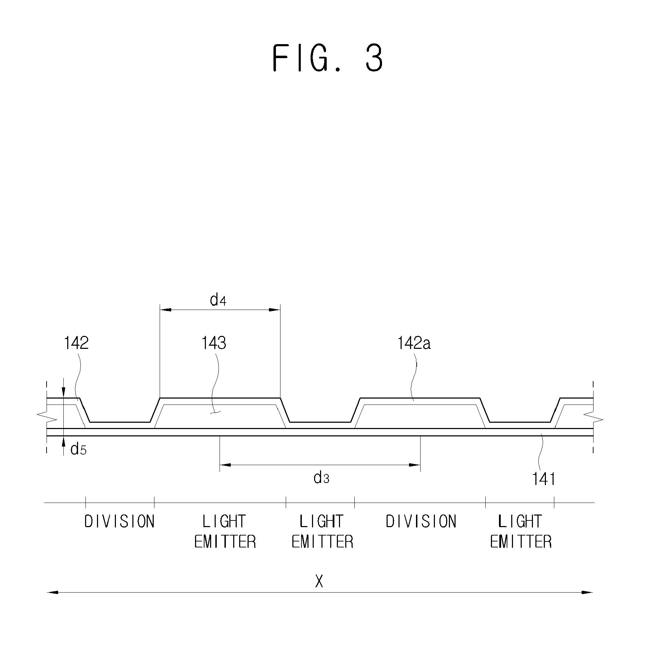

As shown in FIG. 3, the surface light source 140 includes a first light source substrate 141 and a second light source substrate 142. The first and second light source substrates 141 and 142 may include glass. The second light source substrate 142 may be thinner than the first light source substrate 141.

The first light source substrate 141 is shaped like a plate. The second light source substrate 142 is a formed glass and are grooved repeatedly. Where the first and second light source substrates 141 and 142 are separated from each other is a light emitter. Where the first and second light source substrates 141 and 142 contact each other is disposed a division 246. The light emitter and the division 246 are elongated in the second direction 'y' of the reflector 153.

A light emitting space 143 which is formed on the light emitter is filled with a light emitting gas including mercury and neon. A fluorescent layer (not shown) is formed in the second light source substrate 142 to change ultraviolet rays generated by the light emitting gas into visible rays. A reflection layer (not shown) is formed in the first light source substrate 141 to reflect the light from the light emitting space 143 to the diffusion collimation member 150.

The second light source substrate 142 which is formed on the light emitting space 143 includes a flat surface 142a which is in parallel with the liquid crystal display panel 110.

The surface light source 140 has a wider width to emit the light and provides the light with relatively uniform brightness, compared to a line light source. However, the surface light source 140 requires the division 246 to keep a shape of the light emitting space 143 formed in the light emitter. The division 246 does not emit a light itself, and thus the surface light source 140 supplies the light with uneven brightness.

The brightness of the light emitted by the surface light source 140 becomes uniform and is improved through the diffusion collimation member 150 according to the first exemplary embodiment of the present invention.

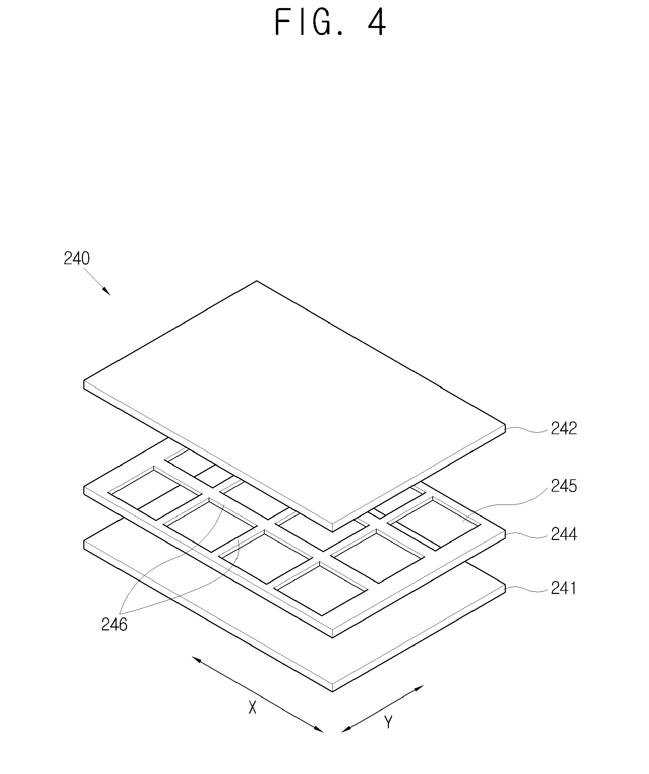

As shown in FIG. 4, according to another exemplary embodiment of the present invention, a first light source substrate 241 and a second light source substrate 242 of a surface light source 240 are shaped like a plate. A wall 244 is formed between the first and second light source substrates 241 and 242. The wall 244 includes a plurality of openings 245 which extends in a first direction.

A light emitter (hereinafter, to be called pixel) is formed by the first and second light source substrates 241 and 242 and the wall 244 which are connected with each other, and a division 246 which does not emit a light is formed between the openings 245. The pixels divided by the division 246 are driven to express various gradations from a backlight unit 130. Boundary lines are shown in the wall 244 as a boundary between pixels, which should be alleviated.

Thus, a light emitted from the surface light source 140 to a liquid crystal display panel 110 should be diffused or collected.

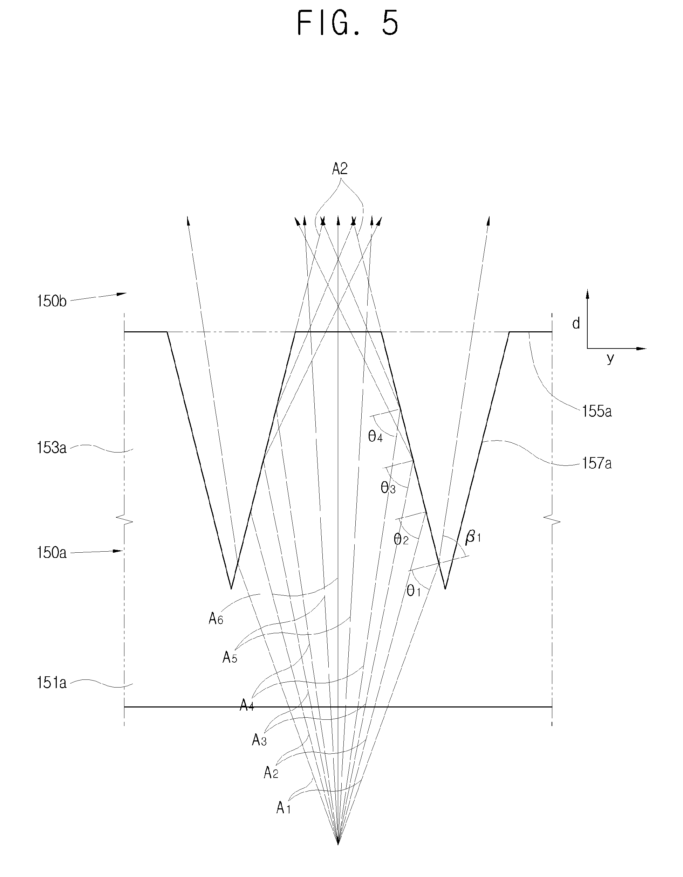

A diffusion collimation member 150 according to Fig. 5 is provided on a path of the light between the surface light source 240 and the liquid crystal display panel 110. The plurality of diffusion collimation members 150 is stacked. The diffusion collimation members 150 include a first diffusion sheet 150a and a second diffusion sheet 150b. Preferably, the diffusion collimation members 150 are plural in number, thereby keeping the thickness of the backlight unit 130 thin and also enhancing light diffusion and collimation. The first diffusion sheet 150a and the second diffusion sheet 150b are sequentially stacked with each other in a moving direction (d) of light, thereby improving brightness and uniformity of light emitted by the surface light source 240 and supplying the light to the liquid crystal display panel 110. The first diffusion sheet 150a and the second diffusion sheet 150b include a first main body 151a and a second main body 151b, and a first reflector 153a and a second reflector 153b. The diffusion collimation members 150 include a transparent material which enhance light transmittivity. The diffusion collimation members 150 may include one of known materials such as polymethyl methacrylate (PMMA), poly carbonate (PC), UV curing resin and polyethylene terephthalate (PET).

The first diffusion sheet 150a and the second diffusion sheet 150b have the same configuration so that a drawing of the second diffusion sheet 150b is avoided here.

Hereinafter, the diffusion collimation members 150 according to the first exemplary embodiment of the present invention will be described. The first main body 151a and the second main body 151b are to be called a main body 151, and the first reflector 153a and the second reflector 153b will be referred to as a reflector 153. A first reflection surface 157a and a second reflection surface 157b will be referred to as a reflection surface 157, and a first through surface 155a and a second through surface 155b will be called a through surface 155. The first diffusion sheet 150a and the second diffusion sheet 150b are sequentially stacked in the moving direction (d) of light, and do not have any difference in configuration. However, the shape and size of the reflector 153 may vary.

The main body 151 supports the reflector 153, and is arranged in parallel with the liquid crystal display panel 110 and toward the surface light source 140. The main body 151 has such a thickness so as to support the reflector 153. The thickness of the first main body 151a and the second main body 151b may be different from each other as necessary. Preferably, the main body 151 is formed integrally with the reflector 153. According to another exemplary embodiment of the present invention, the main body 151 and the reflector 153 may be adhered to each other with various known methods including using ultraviolet rays.

The plurality of reflectors 153 is disposed in the first direction (x) or the second direction (y) with respect to the main body 151, and diffuses or collimates a light emitted by the surface light source 140. The reflectors 153 include the plurality of first reflectors 153a which is in parallel with the first main body 151a in the first direction (x), and the plurality of second reflectors 153b which is provided in parallel with the second main body 151b in the second direction (y). The respective reflectors 153 include the reflection surface 157 and the through surface 155.

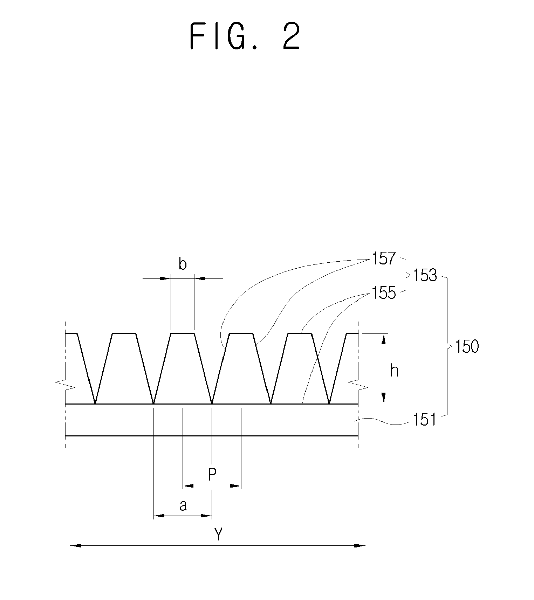

A section of the reflector 153 has a trapezoid shape. As shown in FIG. 2, an extended surface of a lower side (a) and an upper side (b) of the reflector 153 forms the through surface 155, and a pair of extended surface of inclined lines from the lower side (a) to the upper side (b) forms the reflection surface 157. The section of the reflector 153 may vary. The trapezoid section of the first reflector 153a and the trapezoid section of the second reflector 153b may be different from each other. That is, a ratio of the lower side (a) and the upper side (b), an angle θ formed by a surface of the main body 151 and the reflection surface 157 (refer to in FIG. 2), a pitch 'p' of the reflector 153, a height 'h' of the reflector 153 may vary depending on the type and configuration of the surface light source 140, the size of the liquid crystal display panel 110 and a critical angle of the reflection surface 157.

The reflectors 153 are arranged in the first direction (x) or the second direction (y). Preferably, the first direction (x) forms 90° angle with respect to the second direction (y). The details and effects of the angle will be described later. The light which is diffused or collimated by the first reflector 153a provided in the first direction (x) is again diffused or collimated by the second reflector 153b disposed in the second direction (y).

The light emitted by the surface light source 140 is diffused or collimated by the diffusion collimation member 150, thereby improving brightness and brightness uniformity of an image formed on the liquid crystal display panel 110.

The reflection surface 157 includes a pair of inclined sides of the reflector 153 and is provided in the reflector 153. The reflection surface 157 is distinguished from the reflector 153. That is, the inside of the reflection surface 157 includes a denser medium than air in the outside thereof. The inside of the reflector 153 is a dense region while a corrugated part, the outside of the reflector 153, is a sparse density region. Total reflection occurs when incident angles θ1 to θ5 (refer to in FIG. 5) of the light emitted from the surface light source 140 to the reflection surface 157 is larger than the critical angle.

The path of the light which passes the reflector 153 of the diffusion collimation member 150 will be described with reference to FIG. 5. The critical angle of the diffusion collimation member 150 will be assumed as θ2 in FIG. 5. It is assumed that the light travels the first reflector 153a of the first diffusion sheet 150a.

First, a path of the light A1 (refer to FIG. 5) emitted by the surface light source 140 will be described. An incident angle θ1 of the light emitted from the surface light source 140 to the first reflection surface 157a is smaller than the critical angle θ2. Thus, the path of the light A1 is not reflected to the first reflection surface 157a and is refracted to the outside of the first reflection surface 157a. In this case, a refraction angle β1 is larger than the incident angle θ1. The path of the light A1 from the surface light source 140 is refracted to the outside of the first reflector 153a and collimated.

Another path of the light A2 (refer to FIG. 5) emitted by the surface light source 140 will be described. An incident angle θ2 which is incident from the surface light source 140 to the first reflection surface 157a is the same as the critical angle θ2. Thus, the path of the light A2 is refracted to the reflection surface 157a instead of being reflected back into the first reflector 153a. The light emitted by the surface light source 140 travels along the first reflection surface 157a.

Other paths of the light A3 and A4 (refer to FIG. 5) emitted from the surface light source 140 will be described. Incident angles θ3 and θ4 of the light emitted from the surface light source 140 to the first reflection surface 157a are larger than the critical angle θ2. The paths of the light A3 and A4 are reflected inwards instead of being refracted to the outside of the first reflector 153a. That is, total reflection of the paths of the light A3 and A4 occurs in the first reflection surface 157a. Then, the paths of the light A3 and A4 emitted by the surface light source 140 are reflected to the inside of the first reflector 153a.

Other paths of the light A5 and A6 (refer to FIG. 5) emitted by the surface light source 140 will be described. The paths of the light A5 and A6 pass the through surface 155 instead of being incident to the first reflection surface 157a. That is, the paths of the light A5 and A6 are not reflected by the first reflector 153a, and instead travel through the through surface 155.

Thus, the light emitted by the surface light source 140 passes the first diffusion sheet 150a through various paths. The light is mainly collimated by the reflector 153, and then diffused.

The diffused or collimated light is diffused or collimated by the second diffusion sheet 150b in a direction different from the first diffusion sheet 150a. The path of the light diffused or collimated by the second diffusion sheet 150b is the same as that by the first diffusion sheet 150a, and thus the description thereof will be avoided here.

The light emitted by the surface light source 140 is diffused or collimated by the diffusion collimation members 150, thereby improving brightness of light moving toward the liquid crystal display panel 110, and brightness uniformity thereof.

As described above, the path of the light emitted from the surface light source 140 may differ by adjusting the shape and pitch of the reflector 153. The diffusion and collimation direction of light may vary by adjusting the section of the first and second reflectors 153a and 153b.

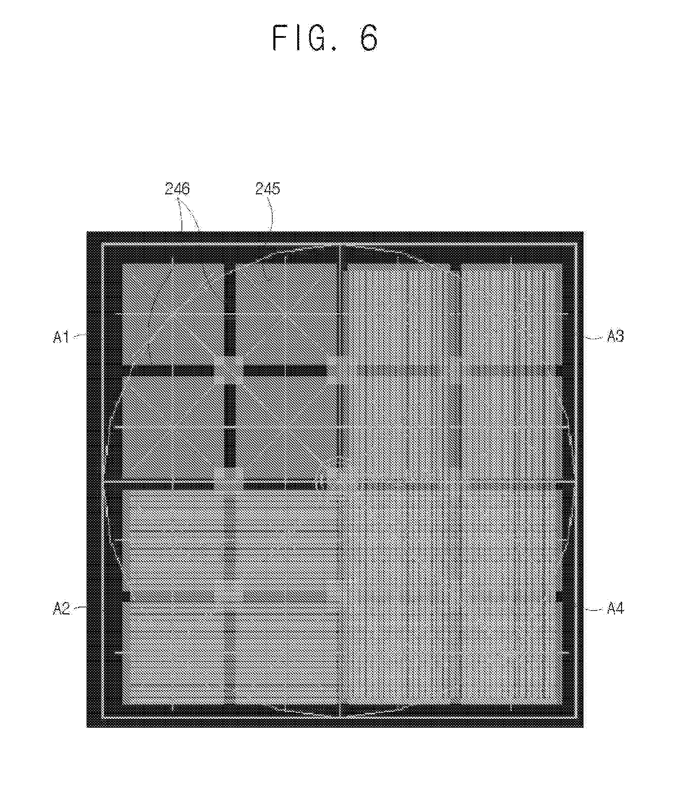

Hereinafter, the display apparatus according to the first exemplary embodiment of the present invention will be described with reference to FIGS. 6 to 8b.

As shown in FIG. 6, the diffusion collimation members 150 according to the first exemplary embodiment of the present invention are provided in the path of the light emitted from the surface light source 140. FIG. 6 illustrates a region A1 which does not include the diffusion collimation member 150 in the path of the light, a region A2 which includes the first diffusion sheet 150a arranged in the first direction (x), a region A3 which includes the second diffusion sheet 150b arranged in the section direction (y) and a region A4 which includes the first diffusion sheet 150a in the first direction (x) and the second diffusion sheet 150b in the second direction (y) overlapping each other.

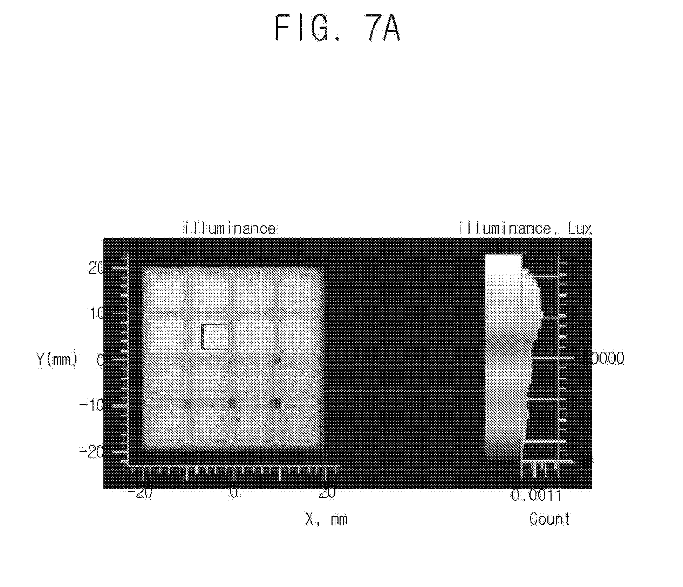

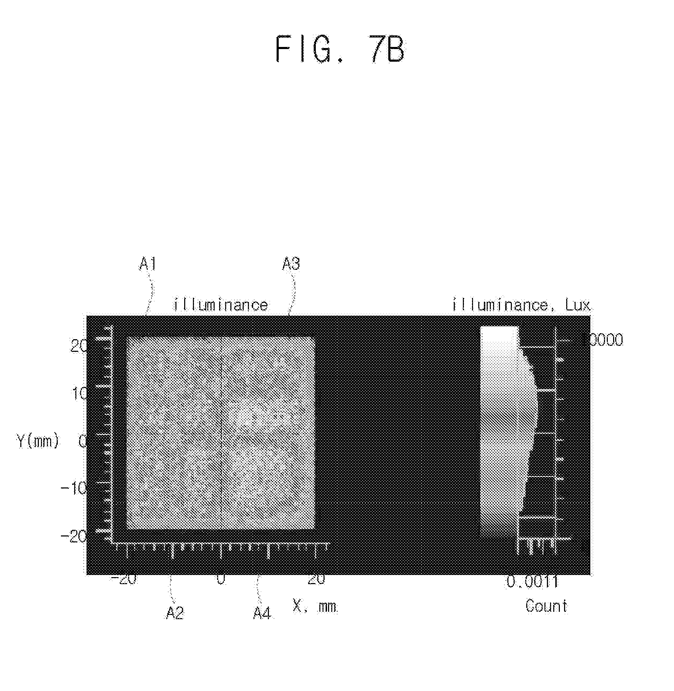

FIGS. 7a and 7b illustrate a simulation result of the display apparatus 100 having the diffusion collimation members 150 arranged as shown in FIG. 6 according to the first exemplary embodiment of the present invention, which is illustrated in colours to compare the brightness uniformity. More specifically, FIG. 7a illustrates brightness before the diffusion collimation members 150 according to the present invention are arranged. FIG. 7b illustrates brightness after the diffusion collimation members 150 according to the present invention are arranged. As shown in FIG. 7b, brightness is not uniform in the respective regions A1 to A4. Brightness is more uniform in the region A4 than in other regions. Brightness uniformity is similar between the regions A2 and A3. Brightness is uneven in the division 246 of the surface light source 240, but more uniform than in the region A1. The region A1 represents lower brightness uniformity than other regions.

The first diffusion sheet 150a in the first direction (x) in FIG 7b reduces uneven brightness caused by the division 246 of the surface light source 240 in the first direction (x). The second diffusion sheet 150b in the second direction (y) in FIG. 7b eliminates un-uniform brightness caused by the division 246 of the surface light source 240 in the second direction (y). The reflectors 153 arranged in the first direction (x) and the second direction (y) eliminates brightness un-uniformity caused by the division 246 of the surface light source 140 in the first direction (x) and the second direction (y), in the region A4 in FIG. 7b.

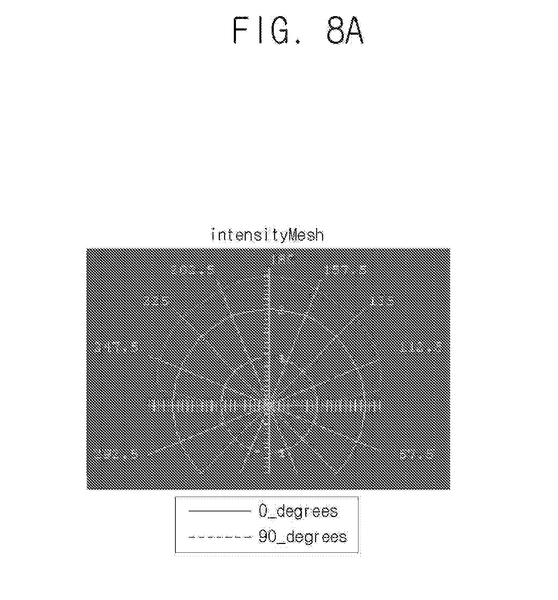

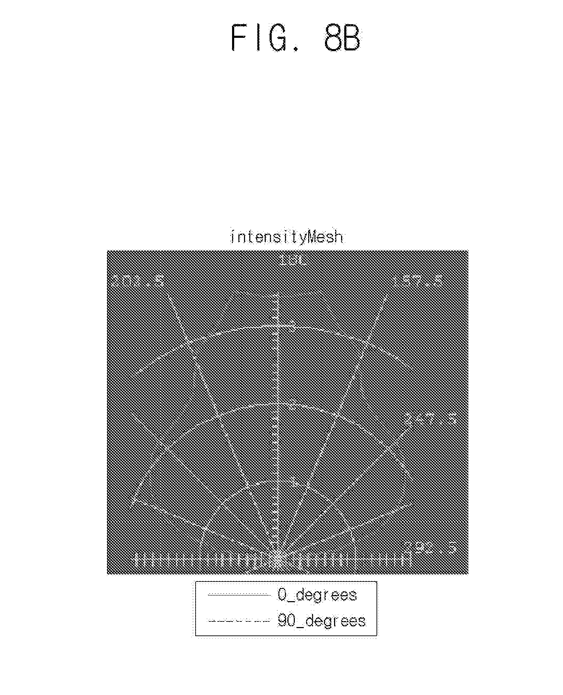

FIG. 8 is a graph which shows effects in collimating the light emitted from pixels of the surface light source 140 by the diffusion collimation members 150. More specifically, FIG. 8a is a simulation result of comparing brightness in various angles before the diffusion collimation members 150 are employed. FIG. 8b is a simulation result of comparing brightness in various angles after the diffusion collimation members 150 are employed. As shown therein, brightness improves (roughly by 21%) with the total reflection of the diffusion collimation members 150.

### Second Exemplary Embodiment

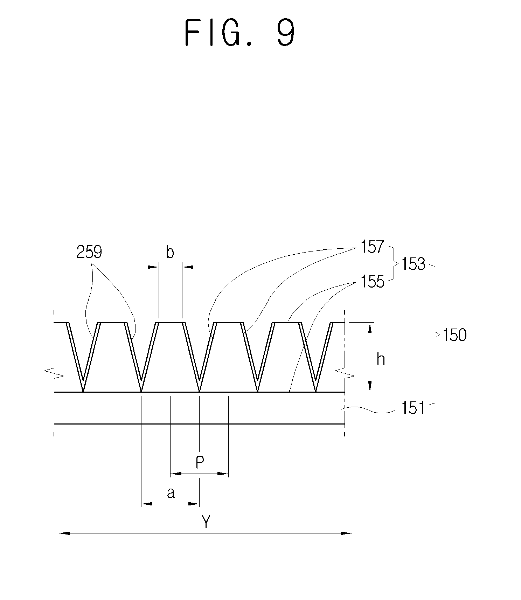

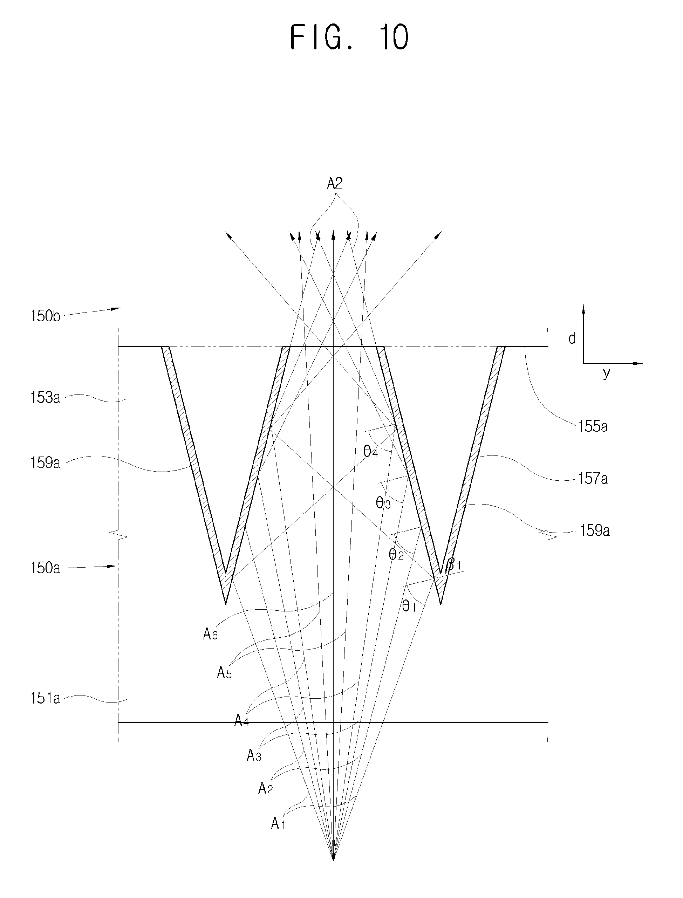

As shown in FIGS. 9 and 10, a display apparatus 100 according to the second exemplary embodiment of the present invention includes a surface light source 140, a diffusion collimation member 150, and a coating layer 259 which is formed either in a first reflector 153a or in a second reflector 153b. The display apparatus 100 further includes a liquid crystal display panel 110.

The coating layer 259 is coated to the first reflector 153a or the second reflector 153b in consideration of a path of the light. The coating layer 259 is formed as a thin layer on a reflection surface 157 of a reflector 153.

Thus, a light in the reflector 153 is not transmitted to the outside of the reflector 153 by refraction.

A path of the light which passes the reflector 153 of the diffusion collimation member 150 will be described with reference to FIG. 10. A critical angle of the diffusion collimation member 150 is assumed as θ2 in FIG. 10. It is assumed that the light travels the first reflector 153a of a first diffusion sheet 150a.

Paths of the light A2 to A6 in FIG. 10 are the same as those in the first exemplary embodiment of the present invention, and thus the description thereof will be avoided here.

First, a path of the light A1 (refer to FIG. 10) emitted by the surface light source 140 will be described. An incident angle θ1 of the light which is incident from the surface light source 140 to a first reflection surface 157a is smaller than a critical angle θ2. The path of the light A1 is reflected to the reflection surface 157a at the same angle as the incident angle θ1 by a coating layer 259a of the first reflection surface 157a, instead of being refracted to the outside of the first reflector 153a. Thus, the path of the light A1 is collimated to the inside of the first reflector 153a.

The collimated and diffused light is again diffused or collimated by a second diffusion sheet 150b in a direction different from the first diffusion sheet 150a. The path of the light diffused or collimated by the second diffusion sheet 150b is the same as that in first diffusion sheet 150b, and thus the description thereof will be avoided here. The coating layer 259 may be formed in the second diffusion sheet 150b as necessary.

The light emitted by the surface light source 140 is diffused or collimated by the diffusion collimation member 150, thereby improving brightness of light moving toward the liquid crystal display panel 110, and brightness uniformity.

According to the second exemplary embodiment of the present invention, the light emitted by the surface light source 140 is collimated more efficiently by the coating layer 259 formed in the reflector 153.

As described above, the present invention provides a display apparatus which includes a diffusion collimation member to diffuse or collimate light emitted by a surface light source and to improve brightness and brightness uniformity.

Also, according to the present invention, light which is emitted by the surface light source is collimated more efficiently.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A backlight unit, comprising:
a surface light source (140) which emits a light; and
a diffusion collimation member (150) which is provided in a path of the light emitted by the surface light source (140), and comprises a first diffusion sheet (150a) having a plurality of first reflectors (153a) arranged in a first direction and a second diffusion sheet (150b) formed on the first diffusion sheet (150a) and having a plurality of second reflectors (153b) arranged in a second direction forming a predetermined angle with respect to the first direction of the first diffusion sheet (150a).

2. The backlight unit according to claim 1, wherein the first diffusion sheet (150a) further comprises a first main body (151a), and the plurality of first reflectors (153a) has a trapezoid section, and is disposed in a surface of the first main body (151a) in the first direction.

3. The backlight unit according to claim 2, wherein the second diffusion sheet (150b) further comprises a second main body (151b), and the plurality of second reflectors (153b) has a trapezoid section, and is disposed in a surface of the second main body (151b) in the second direction forming the predetermined angle with respect to the first direction.

4. The backlight unit according to claim 3, wherein the trapezoid section of the first reflectors is different from the trapezoid section of the second reflectors.

5. The backlight unit, according to any of claims 1 to 4, wherein:
the first reflectors (153a) and the second reflectors (153b) each have a reflection surface to reflect light; and
a coating layer is formed in at least one of the reflection surface of the first reflectors (153a) and the reflection surface of the second reflectors (153b).

6. The backlight unit according to claim 5, wherein the coating layer is disposed in a pair of inclined sides which connect a lower side and an upper side of a trapezoid section of at least one of the first reflectors and the second reflectors (153a, 153b).

7. The backlight unit according to any preceding claim , wherein the surface light source (140) comprises of portions for emitting light and portions for dividing the light emitting portions.

8. The backlight unit according to claim 7, wherein the dividing portions are arranged in a parallel manner.

9. The backlight unit according to claim 7, wherein the dividing portions are arranged in rectangular manner.

10. The backlight unit according to any preceding claim, wherein the first direction forms 90° angle with respect to the second direction.

11. The backlight unit according to any preceding claim, wherein the first diffusion sheet (150a) and the second diffusion sheet (150b) comprise one of polymethyl methacrylate (PMMA), poly carbonate (PC), UV curing resin and polyethylene terephthalate (PET).

12. The backlight unit according to any preceding claim, wherein the backlight unit is used for a LCD type display.

13. A display apparatus, comprising:
a liquid crystal display panel; and
a backlight unit which emits a light to the liquid crystal display panel, wherein the backlight unit is as set forth in any of claims 1 to 12.

14. The display apparatus according to claim 13, wherein the display apparatus is a LCD type display.
